# EUROPEAN PATENT APPLICATION

(11) **EP 4 527 798 A1**
(43) Date of publication of application: **26.03.2025**
(21) Application number: 23820030.7
(22) Date of filing: 26.05.2023
(51) Int. Cl.: C01D 15/06, C01D 5/02

(54) **METHOD FOR PREPARING HIGH-PURITY LITHIUM SULFATE FROM WASTE SAGGAR**

(30) Priority: 09.06.2022 KR 20220070191
(71) Applicant: Koreaseparation Co., Ltd., Donghae-si Gangwon-do 25799 (KR)
(72) Inventor: SONG, Won Hong, Seoul 04780 (KR)
(74) Representative: BCKIP Part mbB
(86) International application number: PCT/KR2023/007293
(87) International publication number: WO 2023/239094

(57) **Abstract**

The present invention provides an optimized method for recovering high-purity lithium sulfate from a lithium-containing composite oxide deposited on an eroded surface of a waste sagger discarded. Therefore, when the method for producing high-purity lithium sulfate from a waste sagger of the present invention is used, it is expected not only to be able to produce high-purity lithium sulfate that can be used for manufacturing lithium secondary batteries by recycling a discarded waste sagger, but also to be able to recycle a positive electrode active material, iron oxide, alumina, silicate, and calcium carbonate obtained as by-products during the production process of the lithium sulfate.

## Description

### TECHNICAL FIELD

The present invention relates to a method for producing high-purity lithium sulfate from a waste sagger. Specifically, the present invention relates to a method for producing high-purity lithium sulfate having a purity of 99.9% or greater by crushing and dissolving a waste sagger, and then performing solid-liquid separation, wet magnetic separation, lithium leaching and concentration.

### BACKGROUND ART

A positive electrode active material of a lithium secondary battery is prepared by being fired at a high temperature in a sagger made of ceramic oxide containing SiO₂, Al₂O₃, and MgO as main components. Since the sagger is used for repeated high-temperature firing of a lithium-containing composite oxide, which is a raw material of the positive electrode active material, the surface of the sagger is eroded over time, and lithium hydroxide, lithium carbonate, and the positive electrode active material are deposited on the eroded portion. Ultimately, the sagger with the surface eroded by the lithium hydroxide, the lithium carbonate, or the like is discarded due to the deterioration in thermal durability. The amount of waste saggers generated domestically is known to be about 9,000 tons per year, but as the demand for lithium secondary batteries rapidly increases due to the popularization of mobile devices and electric vehicles, the amount of waste saggers generated is also expected to increase rapidly.

As described above, a sagger is used in the preparation of a positive electrode active material and eroded by a lithium-containing composite oxide during a high-temperature firing process, and thus, loses its function. Therefore, if a lithium-containing composite oxide deposited in an eroded portion is recovered in the form of high-purity lithium sulfate, lithium carbonate, or lithium phosphate from a waste sagger discarded due to the deterioration in thermal durability caused by repeated high-temperature firing of the lithium-containing composite oxide, the recovered it is expected that it will be recycled lithium-containing composite oxide is expected to be recycled in the production of lithium-ion secondary batteries and reduce production costs. However, there is no known method for recovering a high-purity lithium compound from a waste sagger.

The patent literature and references cited herein are incorporated by reference herein to the same extent that each document is individually and clearly identified by reference.

The patent literature and references cited herein are incorporated by reference herein to the same extent that each document is individually and clearly identified by reference.

### DISCLOSURE OF THE INVENTION

### TECHNICAL PROBLEM

An object of the present invention is to provide a method for recovering high-purity lithium sulfate having a purity of 99.9% or greater from a waste sagger discarded after being used for high-temperature firing when preparing a positive electrode active material for a lithium secondary battery.

Other objects and technical features of the present invention are presented in more detail by a detailed description of the invention, claims, and drawings below.

### TECHNICAL SOLUTION

The present invention provides a method for recovering high-purity lithium sulfate from a waste sagger, wherein the method includes a first step of crushing a waste sagger to produce a waste sagger crushed material, a second step of adding an alkali leaching agent and water to the waste sagger crushed material and then allowing a reaction to occur therebetween to prepare a waste sagger crushed material dissolution reaction slurry, a third step of performing primary solid-liquid separation on the waste sagger crushed material dissolution reaction slurry, a fourth step of preparing a solid phase obtained through the primary solid-liquid separation as a suspension, and then performing a primary wet magnetic separation process to obtain a first magnetic complex and a first non-magnetic complex, a fifth step of preparing the first non-magnetic complex as a suspension, and then performing a secondary wet magnetic separation process to obtain a second magnetic complex and a second non-magnetic complex, a sixth step of introducing water and a leaching agent to the second non-magnetic complex, and then allowing a reaction to occur therebetween to prepare a lithium leaching reaction liquid, a seventh step of performing secondary solid-liquid separation on the lithium leaching reaction liquid, an eighth step of adjusting the pH of a filtrate obtained in a liquid phase through the secondary solid-liquid separation to 6 to 8 to prepare a neutralization reaction liquid, a ninth step of performing tertiary solid-liquid separation on the neutralization reaction liquid, a tenth step of performing reverse osmosis concentration on a filtrate obtained in a liquid phase through the tertiary solid-liquid separation, an eleventh step of performing evaporation and concentration on a concentration liquid obtained through the reverse osmosis concentration process, and a twelfth step of performing quaternary solid-liquid separation on a concentration liquid obtained through the evaporation and concentration to obtain high-purity lithium sulfate in a solid phase.

The waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes, and the leaching agent used for the leaching of the second non-magnetic complex is one or a mixture of two or more selected from the group consisting of sulfuric acid, sulfurous acid, sulfur dioxide, and sulfur trioxide.

In the present invention, an alkali neutralizing agent is added to the filtrate obtained in a liquid phase through the secondary solid-liquid separation to adjust the pH to 6 to 8, and then the tertiary solid-liquid separation is performed to remove silicon and aluminum, which are impurities, in a solid phase, and the reverse osmosis concentration uses a batch-type reverse osmosis facility, and the upper limit of the working pressure of a pump is set to 50 kg/cm², and the filtrate obtained in a liquid phase through the tertiary solid-liquid separation is concentrated until the concentration of lithium therein reaches 10,000 mg/ℓ to 70,000 mg/ℓ.

The lithium sulfate produced by the production method of the present invention has a purity of 99.9% or greater.

### ADVANTAGEOUS EFFECTS

The present invention provides an optimized method for recovering high-purity lithium sulfate from a lithium-containing composite oxide deposited on an eroded surface of a waste sagger discarded. Therefore, when the method for producing high-purity lithium sulfate from a waste sagger of the present invention is used, it is expected not only to be able to produce high-purity lithium sulfate that can be used for manufacturing lithium secondary batteries by recycling a discarded waste sagger, but also to be able to recycle a positive electrode active material, iron oxide, alumina, silicate, and calcium carbonate obtained as by-products during the production process of the lithium sulfate.

### BRIEF DESCRIPTION OF THE DRAWINGS

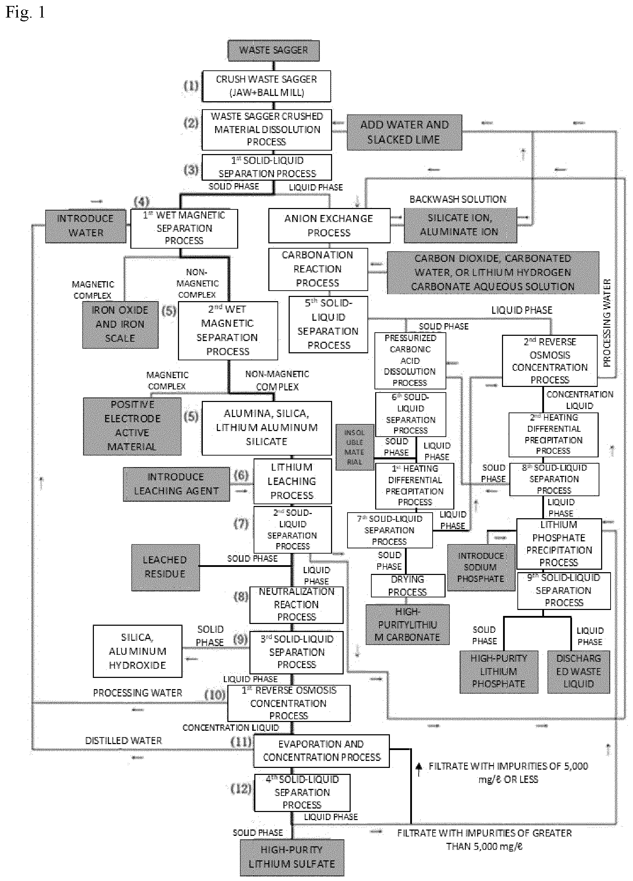

FIG. 1 schematically shows a method for producing high-purity lithium sulfate from a waste sagger of the present invention.

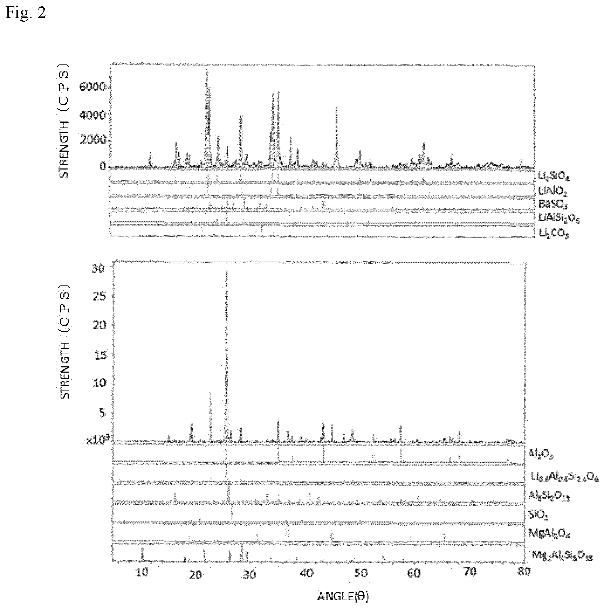

FIG. 2 shows results of XRD analysis of constituent minerals of a waste sagger of the present invention.

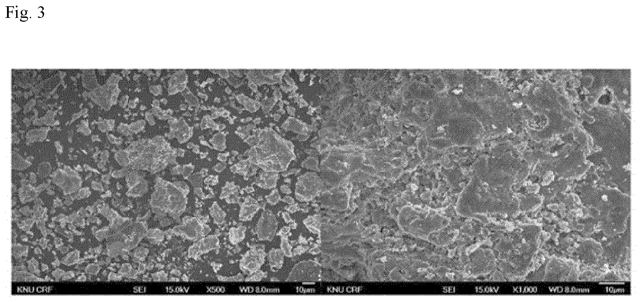

FIG. 3 is a photograph showing the overall particle size distribution and particle surface structure by using a scanning electron microscope (SEM) photograph of a waste sagger crushed material.

### BEST MODE FOR CARRYING OUT THE INVENTION

The present invention relates to a method for producing high-purity lithium sulfate from a waste sagger. Due to the repeated use of a sagger, the sagger is eroded by lithium hydroxide or lithium carbonate, and is destructed. An object of the present invention is to recover lithium sulfate, which is a high value-added lithium compound, with high purity from a waste sagger which is discarded without being recycled. The waste sagger is a ceramic container used in firing a positive electrode active material for a secondary battery, and contains SiO₂, Al₂O₃, and MgO as main components. Table 1 shows the composition of a waste sagger used in sintering NCA (sample name: SG1) and NCM (sample name: SG2), which are positive electrode materials.

**[Table 1]**

| Composition | SG1 (NCA) | SG2 (NCM) |
|---|---|---|
| Li₂O (as Li) | 4.52 (2.1)% | 1.89 (0.88)% |
| NiO | 0.13% | 0.16% |
| Co₃O₄ | 0.01% | 0.02% |
| SiO₂ | 49.38% | 30.73% |
| Al₂O₃ | 38.25% | 51.38% |
| CaO | 0.48% | 0.52% |
| MgO | 5.37% | 13.63% |
| Fe₂O₃ | 0.33% | 0.54% |
| Na₂O | 0.32% | 0.12% |
| K₂O | 0.30% | 0.19% |
| etc. | 0.91% | 0.82% |

As a result of the analysis, SG1 and SG2 are confirmed to have a high lithium (Li) content of 2.1% and 0.88%, respectively, and when the lithium content is converted into a lithium carbonate content, the lithium carbonate content corresponds to SG1 = 11.17% and SG2 = 4.68%. In addition, the contents of nickel and cobalt are confirmed to be 0.13% to 0.16% and 0.01% to 0.02%, respectively, which is confirmed to be sufficient for recovery.

The waste sagger is composed of mullite, cordierite, alumina, quartz, magnesium aluminate, lithium silicate, lithium aluminum oxide, lithium aluminum silicate, and the like. Among the constituent components of the waste sagger, materials that cause the destruction of the waster sagger are lithium silicate, lithium aluminum oxide, lithium aluminum silicate, and the like.

The present invention provides a method for recovering high-purity lithium sulfate from a waste sagger, wherein the method includes a first step of crushing a waste sagger to produce a waste sagger crushed material, a second step of adding an alkali leaching agent and water to the waste sagger crushed material and then allowing a reaction to occur therebetween to prepare a waste sagger crushed material dissolution reaction slurry, a third step of performing primary solid-liquid separation on the waste sagger crushed material dissolution reaction slurry, a fourth step of preparing a solid phase obtained through the primary solid-liquid separation as a suspension, and then performing a primary wet magnetic separation process to obtain a first magnetic complex and a first non-magnetic complex, a fifth step of preparing the first non-magnetic complex as a suspension, and then performing a secondary wet magnetic separation process to obtain a second magnetic complex and a second non-magnetic complex, a sixth step of introducing water and a leaching agent to the second non-magnetic complex, and then allowing a reaction to occur therebetween to prepare a lithium leaching reaction liquid, a seventh step of performing secondary solid-liquid separation on the lithium leaching reaction liquid, an eighth step of adjusting the pH of a filtrate obtained in a liquid phase through the secondary solid-liquid separation to 6 to 8 to prepare a neutralization reaction liquid, a ninth step of performing tertiary solid-liquid separation on the neutralization reaction liquid, a tenth step of performing reverse osmosis concentration on a filtrate obtained in a liquid phase through the tertiary solid-liquid separation, an eleventh step of performing evaporation and concentration on a concentration liquid obtained through the reverse osmosis concentration process, and a twelfth step of performing quaternary solid-liquid separation on a concentration liquid obtained through the evaporation and concentration to obtain high-purity lithium sulfate in a solid phase.

The waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes, and the leaching agent used for the leaching of the second non-magnetic complex is one or a mixture of two or more selected from the group consisting of sulfuric acid, sulfurous acid, sulfur dioxide, and sulfur trioxide.

An alkali neutralizing agent is added to the filtrate obtained in a liquid phase through the secondary solid-liquid separation to adjust the pH to 6 to 8, and then the tertiary solid-liquid separation is performed to remove silicon and aluminum, which are impurities, in a solid phase, and the reverse osmosis concentration uses a batch-type reverse osmosis facility, and the upper limit of the working pressure of a pump is set to 50 kg/cm², and the filtrate obtained in a liquid phase through the tertiary solid-liquid separation is concentrated until the concentration of lithium therein reaches 10,000 mg/ℓ to 70,000 mg/ℓ.

The high-purity lithium sulfate produced by the production method of the present invention has a purity of 99.9% or greater.

### MODE FOR CARRYING OUT THE INVENTION

Hereinafter, the method for producing high-purity lithium sulfate from a waste sagger of the present invention will be described in detail for each process.

### (1) First process: Waste sagger crushing process

A waste sagger is crushed into powder of 200# or less. There is a problem in that the crushing efficiency is too low to pulverize the waste sagger at once. Therefore, it is preferable that the waste sagger is coarsely crushed to 1 mm or less through primary crushing using a jaw crusher, and then crushed to 200# (mesh) or less through secondary crushing using a ball mill. The waste sagger has a high compressive strength and is vulnerable to impact. An impact-type crusher may be applied to the crushing of the waste sagger, but crushed particles having sharp surfaces with high hardness are generated, resulting in increasing the wear of parts of the crusher, thereby increasing the costs. Therefore, in the present invention, a jaw crusher with easy replacement of parts and low cost is used in the primary crushing process, and a ball mill is used in the secondary crushing process. Preferably, in order to improve the crushing efficiency, a medium crusher such as an impact crusher may be arranged before the secondary crushing process.

### (2) Second process: Waste sagger crushed material dissolution process

The waste sagger crushed material pulverized through the first process includes a lithium-containing material such as lithium hydroxide, lithium carbonate, lithium silicate, lithium aluminum oxide, or lithium aluminum silicate. Most of the lithium-containing materials are water-soluble, but some of the lithium-containing materials which contain lithium aluminum silicate have low solubility with respect to water, and thus, have a problem of being difficult to be dissolved only with water. In order to solve the above-described problem, in the present invention, a waste sagger crushed material dissolution process is applied in which the waste sagger crushed material is mixed with an alkali leaching agent including one or a mixture of two or more selected from the group consisting of a hydroxide of an alkali metal, a carbonate of an alkali metal, or a hydroxide of an alkali earth metal, and water, and then the mixture is heated. Since the alkali leaching agent is heated and dissolved together, lithium aluminum silicate or the like having low solubility with respect to water may also be decomposed and dissolved, so that the waste sagger crushed material dissolution process of the present invention has an advantage of increasing the recovery rate of lithium. Decomposition and dissolution reactions of the lithium-containing material having low solubility tend to increase in reactivity in proportion to the concentration of an alkali and the temperature. If an alkali leaching agent containing an alkali metal salt is used to this end, the concentration of silicon and aluminum increases, which requires a separate process to remove the same. In contrast, if a leaching agent made of an oxide or hydroxide of an alkali earth metal and water is used, soluble silicon or aluminum and a poorly soluble salt are formed, which promote the decomposition of lithium aluminum silicate and at the same time, help to maintain the concentration of the silicon and the aluminum in a solution low, and which react with lithium carbonate having relatively low solubility to produce lithium hydroxide with high solubility and poorly soluble carbonate, so that there is an advantage of improving the leaching rate of lithium. Therefore, in the waste sagger crushed material dissolution process of the present invention, calcium hydroxide, calcium oxide, or magnesium hydroxide is used as a leaching agent to promote the extraction of lithium, and the amount thereof added is suitably 5 parts by weight to 50 parts by weight based on 100 weight parts of the waste sagger. It has been confirmed that the waste sagger crushed material dissolution process requires 6 hours or more to complete the reaction at a temperature of 20 °C or lower, and the reaction is completed within 2 hours at 50 °C, and the reaction is completed within 30 minutes at 80 °C. In addition, the reaction is completed within 10 minutes around 100 °C, but there is a problem in that the loss of energy due to the evaporation of water is significant. Therefore, the waste sagger crushed material dissolution process of the present invention is preferably performed for 30 minutes to 120 minutes at 50 °C to 80 °C.

In summary, the preferred waste sagger crushed material dissolution process of the present invention is to heat the waste sagger crushed material slurry containing calcium hydroxide, calcium oxide, or magnesium hydroxide, which is a leaching agent, in an amount of 5 parts by weight to 50 parts by weight based on 100 parts by weight of the waste sagger crushed material crushed to 200# (mesh) or less at a temperature of 50 °C to 80 °C to be reacted for 30 minutes to 120 minutes. For reference, if alkali metal hydroxide (or oxide) and alkali metal hydroxide (or oxide) corresponding to 5 % to 50% of the amount of the alkali metal hydroxide used are further introduced under the same conditions, there is an effect of increasing the leaching rate and leaching rate of lithium by about 5%. The above-described method may be a preferred method if an increase in process cost can be tolerated.

### (3) Third process: Primary solid-liquid separation process

A dissolution reaction liquid of the waste sagger crushed material is subjected to solid-liquid separation (primary solid-liquid separation). The primary solid-liquid separation may be performed using a sedimentation tank, a filter press, a screw filter, a centrifuge, or the like, or a combination of two or more thereof to increase the efficiency. A solid phase obtained by the primary solid-liquid separation includes a positive electrode active material and a refractory material composition, and a liquid phase (filtrate) includes lithium (Li⁺), aluminum (Al(OH)₄⁻), and silicon (H₂SiO₄²⁻).

### (4) Fourth process: Primary wet magnetic separation process

Primary wet magnetic separation is performed on the solid phase obtained through the primary solid-liquid separation. It is preferable that the primary wet magnetic separation process is performed after preparing a slurry by adding water to the solid phase, and it is sufficient for the water to have quality similar to that of industrial water, and it is also possible to reuse the water used in the process as long as it has the same quality. The primary wet magnetic separation is to remove iron pieces (iron oxide) or iron scales mixed in by wear during the crushing of the waste sagger. The iron pieces or the iron scales have very strong magnetization ability, so that it is possible to remove the iron pieces or the iron scales as magnetic complexes at a magnetic flux density of about 100 gauss to 500 gauss. At 200 gauss or less, the iron pieces and the iron scales are mostly removed as magnetic complexes, but at greater than 200 gauss, the mixing-in rate of a positive electrode active material increases together with the iron pieces and the iron scales as magnetic complexes. Therefore, if the wet magnetic separation is performed at greater than 200 gauss, separate magnetic force may be required for the mixed-in positive electrode active material. Magnetic complexes separated through the primary wet magnetic separation process includes iron pieces and iron scales, and non-magnetic complexes includes a positive electrode active material, alumina, silica, magnesium aluminate, aluminum silicate, and lithium aluminum silicate.

### (5) Fifth process: Secondary wet magnetic separation process

The secondary wet magnetic separation process of the present invention is to separate, from the non-magnetic complexes of the primary wet magnetic separation process, a positive electrode active material containing nickel oxide, cobalt oxide, and the like, alumina, silica, magnesium aluminate, aluminum silicate, and lithium aluminum silicate. The positive electrode active material included in the non-magnetic complexes has a weak magnetic or paramagnetic body. Therefore, a magnet having a high magnetic flux density is required to recover the positive active material as a magnetic complex. The secondary wet magnetic separation process of the present invention may use a high-gradient magnetic separator having a magnetic flux density of 10,000 gauss or greater, and may preferably use a high-gradient magnetic separator having a magnetic flux density of 30,000 gauss or greater. In addition, the high-gradient magnetic separator may preferably have a structure in which a slurry containing particles to be separated flows between magnetized magnetic media. The solid concentration of the slurry may be 1% to 10%. If the solid concentration is less than 1%, there is a problem in that the number of unnecessary storage tanks increases and the energy cost increases due to an increase in water capacity, and if the solid concentration is greater than 10%, the separation efficiency is significantly degraded. Through the secondary wet magnetic separation process, the positive electrode active material is separated as a magnetic complex, and the remaining compositions of the waste sagger from which the water-soluble lithium has been removed, such as the alumina, the silica, the magnesium aluminate, the aluminum silicate, and the lithium aluminum silicate, are separated non-magnetic complexes. The amount of lithium contained in the lithium aluminum silicate, which is a poorly soluble lithium compound remaining in the solid phase of the primary solid-liquid separation process after water leaching, is approximately 1,000 mg to 6,000 mg per 1 kg of the waste sagger crushed material.

### (6) Sixth process: Lithium leaching process

When the poorly soluble lithium compound (lithium aluminum silicate) included in the non-magnetic complexes of the secondary wet magnetic separation process is reacted with a leaching agent, a leached liquid from which lithium has been eluted and leached residues are obtained. If lithium sulfate is to be obtained from the leached liquid from which lithium has been eluted, one or a mixture of two or more selected from the group consisting of sulfuric acid, sulfurous acid, sulfur dioxide, and sulfur trioxide may be used as an acid leaching agent. When leaching lithium from the poorly soluble lithium compound by using the leaching agent, if the temperature of a reaction liquid is below 100 °C, there is a problem in that it is difficult to increase the leaching rate to 95% or greater. In order to solve the above-described problem, in the present invention, lithium is recovered with a leaching rate of 95% or greater by setting the reaction temperature to 100 °C to 200 °C and performing stirring sufficiently for 1 hour or more.

According to the embodiment of the present invention, it is preferable that the acid leaching agent is added in an amount which allows the pH of the reaction liquid to be 1 to 2 after the leaching reaction, and in the case of using sulfuric acid, the sulfuric acid may be used in an amount of 5 parts by weight to 50 parts by weight based on 100 parts by weight of the non-magnetic complexes. Preferably, if 50 parts by weight of sulfuric acid is added to 100 parts by weight of the non-magnetic complexes, and then 350 parts by weight of a slurry mixed with water is introduced into a sealed reaction container to be subjected to a leaching reaction at 150 °C for 3 hours, 97% or greater of lithium is leached. If an acid is used, most of insoluble materials are oxides containing silicon or aluminum.

### (7) Seventh process: Secondary solid-liquid separation process

Solid-liquid separation is performed on a leaching reaction slurry which has undergone the above-described lithium leaching process to separate a leached liquid containing the eluted lithium into a liquid phase, and leached residues into a solid phase. The leached residues include silica, alumina, and magnesium as major components, and the above-described solid-liquid separation may use a solid-liquid separation may be performed using a solid-liquid separation device such as a filter press.

### (8) Eighth process: Neutralization reaction process

A leached liquid obtained in a liquid phase from the secondary solid-liquid separation process contains impurities such as aluminum and silicon in addition to lithium, and a neutralization reaction process is performed to remove the impurities. The aluminum and silicon components are present as Al(OH)₃, SiO₂·H₂O, and the like in a neutral pH range, and the Al(OH)₃, SiO₂·H₂O, and the like are leached due to low solubility. Therefore, if the pH of the leached liquid is adjusted to the neutral region (pH 6 to 8), the impurities are separated as precipitates and removed, so that it is possible to obtain lithium in an aqueous solution state. If an acid leaching agent is used, a hydroxide of an alkali metal, calcium hydroxide, calcium oxide, magnesium hydroxide, or the like may be used as a neutralizing agent. Since heat is generated when the neutralizing agent is added, there is no need for a separate heating process, but if the temperature of a reaction liquid is high, the growth and aggregation of impurity particles is promoted, thereby facilitating solid-liquid separation, so that it is preferable that the neutralization reaction is performed by heating the reaction liquid to 70 °C to 100 °C.

### (9) Ninth process: Tertiary solid-liquid separation process

Tertiary solid-liquid separation is performed on the neutralization reaction liquid to separate a lithium aqueous solution and precipitates produced through the neutralization reaction process. When the solid-liquid separation is performed on the neutralization reaction liquid, lithium is obtained in a liquid phase and impurities are obtained in a solid phase. The impurities include silica, aluminum hydroxide, and the like.

### (10) Tenth process: Primary reverse osmosis concentration process

Lithium contained in the lithium aqueous solution of a neutral pH obtained in a liquid phase through the tertiary solid-liquid separation has a concentration of 300 mg/ℓto 3,000 mg/ℓ, and the concentration thereof is slightly low to recover the lithium directly without concentration. Therefore, in the present invention, the lithium aqueous solution is concentrated to increase the lithium concentration, and then lithium recovery is performed. As for the concentration method, it is preferable to use a reverse osmosis filter having a low energy cost. As the reverse osmosis filter of the present invention, it is preferable to use an inexpensive batch-type reverse osmosis facility instead of a multi-stage countercurrent-type reverse osmosis facility used in a large-scale desalination process. The concentration of the lithium aqueous solution may be performed such that the lithium concentration reaches 10,000 mg/ℓ to 70,000 mg/ℓ. If lithium is concentrated to a concentration lower than 10,000 mg/ℓ, the energy cost of the subsequent evaporation and concentration process becomes excessive, and if lithium is concentrated to a concentration higher than 70,000 mg/ℓ, the energy cost required to apply a high reverse osmosis pressure becomes excessive, which is no different from an evaporation method. Preferably, the concentration process may be performed such that the concentration reaches 50,000 mg/ℓ. In order to perform concentration until the lithium concentration reaches 50,000 mg/ℓ, a water level control sensor may be used, and the upper limit of the working pressure of a pump may be set to 50 kg/cm². A filtrate (water) obtained in the reverse osmosis concentration process may be used in the above-described primary wet magnetic separation process.

### (11) Eleventh process: Evaporation and concentration process

If a concentration liquid obtained through the reverse osmosis concentration process is continuously heated and concentrated, lithium sulfate precipitates, and if the precipitated lithium sulfate is subjected to solid-liquid separation, lithium sulfate may be obtained. As for the above-described concentration, a method of performing concentration by heating to 100 °C under atmospheric pressure and a method of performing evaporation and concentration at a temperature of 100 °C or lower under reduced pressure may be used. In the present invention, the evaporation and concentration method is used, and it is preferable that the evaporation and concentration is performed until the concentration of lithium sulfate in a concentration liquid reaches a level of 50 to 70%. The concentration liquid obtained in the above-described evaporation and concentration process is introduced to solid-liquid separation, and a filtrate (water) may be used in the above-described primary wet magnetic separation process.

### (12) Twelfth process: Quaternary solid-liquid separation process

Solid-liquid separation is performed on the concentration liquid obtained through evaporation and concentration process to obtain high-purity lithium sulfate in a solid phase and an impurity aqueous solution (filtrate) in a liquid phase. The filtrate is processed by different processes depending on the concentration of impurities. If the impurity concentration of the filtrate is 5,000 mg/ℓ or less, the filtrate is re-introduced to the evaporation and concentration process to perform re-concentration, and if the impurity concentration is greater than 5,000 mg/ℓ, the filtrate is introduced to a lithium phosphate precipitation process to be processed. The solid phase obtained from the quaternary solid-liquid separation process is lithium sulfate, and the lithium sulfate is high-purity lithium sulfate of 99.0% or greater.

The specific embodiments described in this specification are representative of preferred embodiments or examples of the present invention, and the scope of the present invention is not limited thereby. It will be apparent to those skilled in the art that modifications and other uses of the present invention do not depart from the scope of the invention described in the claims of this specification.

### INDUSTRIAL APPLICABILITY

When the method for producing high-purity lithium sulfate from a waste sagger of the present invention is used, it is possible not only to produce high-purity lithium sulfate that can be used for manufacturing lithium secondary batteries by recycling a discarded waste sagger, but also to recycle a positive electrode active material, iron oxide, alumina, silicate, and calcium carbonate obtained as by-products during the production process of the lithium sulfate.

## Claims

1. A method for producing high-purity lithium sulfate, the method comprising:
a first step of crushing a waste sagger to produce a waste sagger crushed material;
a second step of adding an alkali leaching agent and water to the waste sagger crushed material and then allowing a reaction to occur therebetween to prepare a waste sagger crushed material dissolution reaction slurry;
a third step of performing primary solid-liquid separation on the waste sagger crushed material dissolution reaction slurry;
a fourth step of preparing a solid phase obtained through the primary solid-liquid separation as a suspension, and then performing a primary wet magnetic separation process to obtain a first magnetic complex and a first non-magnetic complex;
a fifth step of preparing the first non-magnetic complex as a suspension, and then performing a secondary wet magnetic separation process to obtain a second magnetic complex and a second non-magnetic complex;
a sixth step of introducing water and a leaching agent to the second non-magnetic complex, and then allowing a reaction to occur therebetween to prepare a lithium leaching reaction liquid;
a seventh step of performing secondary solid-liquid separation on the lithium leaching reaction liquid;
an eighth step of adjusting the pH of a filtrate obtained in a liquid phase through the secondary solid-liquid separation to 6 to 8 to prepare a neutralization reaction liquid;
a ninth step of performing tertiary solid-liquid separation on the neutralization reaction liquid;
a tenth step of performing reverse osmosis concentration on a filtrate obtained in a liquid phase through the tertiary solid-liquid separation;
an eleventh step of performing evaporation and concentration on a concentration liquid obtained through the reverse osmosis concentration process; and
a twelfth step of performing quaternary solid-liquid separation on a concentration liquid obtained through the evaporation and concentration to obtain high-purity lithium sulfate in a solid phase.

2. The method of claim 1, wherein the waste sagger crushed material dissolution reaction slurry is prepared by adding 5 parts by weight to 50 parts by weight of calcium hydroxide, calcium oxide, or magnesium hydroxide, which is an alkali leaching agent, based on 100 parts by weight of the waste sagger crushed material which has been crushed to 200# (mesh) or less, mixing 350 parts by weight of water thereto, and then allowing a reaction to occur therebetween at 50 °C to 80 °C for 30 minutes to 120 minutes.

3. The method of claim 1, wherein the leaching agent used for the leaching of the second non-magnetic complex is one or a mixture of two or more selected from the group consisting of sulfuric acid, sulfurous acid, sulfur dioxide, and sulfur trioxide.

4. The method of claim 1, wherein an alkali neutralizing agent is added to the filtrate obtained in a liquid phase through the secondary solid-liquid separation to adjust the pH to 6 to 8, and then the tertiary solid-liquid separation is performed to remove silicon and aluminum, which are impurities, in a solid phase.

5. The method of claim 1, wherein the reverse osmosis concentration uses a batch-type reverse osmosis facility, and the upper limit of the working pressure of a pump is set to 50 kg/cm², and the filtrate obtained in a liquid phase through the tertiary solid-liquid separation is concentrated until the concentration of lithium therein reaches 10,000 mg/ℓ to 70,000 mg/ℓ.

6. The method of claim 1, wherein the high-purity lithium sulfate has a purity of 99.9% or greater.
